# EUROPEAN PATENT APPLICATION

(11) **EP 4 618 675 A1**
(43) Date of publication of application: **17.09.2025**
(21) Application number: 22965228.4
(22) Date of filing: 11.11.2022
(51) Int. Cl.: H04W 72/21, H04W 72/0457, H04W 72/1268

(54) **TERMINAL, BASE STATION, AND COMMUNICATION METHOD**

(71) Applicant: NTT DOCOMO, INC., Tokyo 100-6150 (JP)
(72) Inventor: OKAWA, Riki, Tokyo 100-6150 (JP)
(74) Representative: Hoffmann Eitle
(86) International application number: PCT/JP2022/042143
(87) International publication number: WO 2024/100905

(57) **Abstract**

A terminal includes: a control unit configured to perform uplink transmission switching between two cells from among a plurality of cells; and a reception unit configured to receive, from a base station, information indicating pairs of two cells from among the plurality of cells. The control unit determines a location in a time domain of a switching period of the uplink transmission switching for each of the pairs, based on the information.

## Description

### FIELD OF THE INVENTION

The present invention relates to a terminal, a base station and a communication method in a wireless communication system.

### BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

In NR, enhancement of a multi-carrier uplink transmission is being discussed. For example, an uplink transmission switching function of dynamically switching carriers (bands) used for uplink transmission by a terminal that simultaneously supports up to two transmissions is being discussed. With respect to the uplink transmission switching function, the number of configured carriers (bands) has been two in the 3GPP (3rd Generation Partnership Project) Release 17 or earlier releases, and the expansion of the number of carriers (bands) to up to four is being discussed.

In the conventional 3GPP Release 17, the switching period of the uplink transmission switching has been configurable in a case of two bands per antenna. However, in the 3GPP Release 18 in which the number of bands per antenna is three or four, there may be a case in which the switching period of the uplink transmission switching cannot be configured.

### CITATION LIST

### Non-Patent Document

Non-Patent Document 1: 3GPP TS 38.300 V17.1.0 (2022-06)

### SUMMARY OF THE INVENTION

### TECHNICAL PROBLEM

The present invention has been made in view of the above points, and it is an object of the present invention to appropriately configure the switching period of the uplink transmission switching regardless of the number of bands per antenna.

### SOLUTION TO PROBLEM

According to an embodiment of the present invention, a terminal includes: a control unit configured to perform uplink transmission switching between two cells from among a plurality of cells; and a reception unit configured to receive, from a base station, information indicating pairs of two cells from among the plurality of cells. The control unit determines a location in a time domain of a switching period of the uplink transmission switching for each of the pairs, based on the information.

### ADVANTAGEOUS EFFECTS OF INVENTION

According to an embodiment of the present invention, the switching period of the uplink transmission switching can be appropriately configured in the wireless communication system regardless of the number of bands per antenna.

### BRIEF DESCRIPTION OF THE DRAWINGS

[Fig. 1] is a drawing illustrating a configuration example (1) of a wireless communication system.
[Fig. 2] is a drawing illustrating a configuration example (2) of a wireless communication systemT
[Fig. 3] is a drawing illustrating an example of UL Tx switching in the 3GPP Release 16.
[Fig. 4] is a drawing illustrating an example of UL Tx switching in the 3GPP Release 17.
[Fig. 5] is a drawing illustrating an example of UL Tx switching in an embodiment of the present invention.
[Fig. 6] is a drawing illustrating an example of a location used for configuring the switching period in the UL Tx switching in an embodiment of the present invention.
[Fig. 7] is a drawing illustrating an example of a location used for configuring the switching period in the UL Tx switching in an embodiment of the present invention.
[Fig. 8] is a drawing illustrating an example of RRC Configuration used for configuration of the switching period location.
[Fig. 9] is a drawing illustrating a message structure of CellGroupConfig in RRC Configuration in the 3GPP Release 17.
[Fig. 10] is a drawing illustrating an example of CellGroupConfig in RRC Configuration in First embodiment.
[Fig. 11] is a flowchart illustrating an example of an operation performed by a terminal in First embodiment.
[Fig. 12] is a drawing illustrating an example of ServingCellConfig in RRC Configuration in Second embodiment.
[Fig. 13] is a flowchart illustrating an example of an operation performed by a terminal in Second embodiment.
[Fig. 14] is a flowchart illustrating an example of an operation performed by a terminal in Second embodiment.
[Fig. 15] is a drawing illustrating an example of ServingCellConfig in RRC Configuration in Third embodiment.
[Fig. 16] is a flowchart illustrating an example of an operation performed by a terminal in Third embodiment.
[Fig. 17] is a flowchart illustrating an example of an operation performed by a terminal in Third embodiment.
[Fig. 18] is a drawing illustrating an example of a functional structure of a base station 10 related to an embodiment of the present invention.
[Fig. 19] is a drawing illustrating an example of a functional structure of a terminal 20 related to an embodiment of the present invention.
[Fig. 20] is a drawing illustrating an example of a hardware structure of the base station 10 or the terminal 20 related to an embodiment of the present inventionW
[Fig. 21] is a drawing illustrating an example of a structure of a vehicle 2001 in an embodiment of the present invention.

### DETAILED DESCRIPTION OF THE PREFERRED EMBODIMENTS

Hereinafter, one or more embodiments of the present invention will be described by referring to the drawings. It should be noted that the embodiments described below are examples. Embodiments of the present invention are not limited to the following embodiments.

In an operation of a wireless communication system according to an embodiment the present invention, the conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

In one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

In an embodiment of the present invention, the expression, a radio parameter is "configured" may mean that a predetermined value is pre-configured, or may mean that a radio parameter indicated by a base station 10 or a terminal 20 is configured.

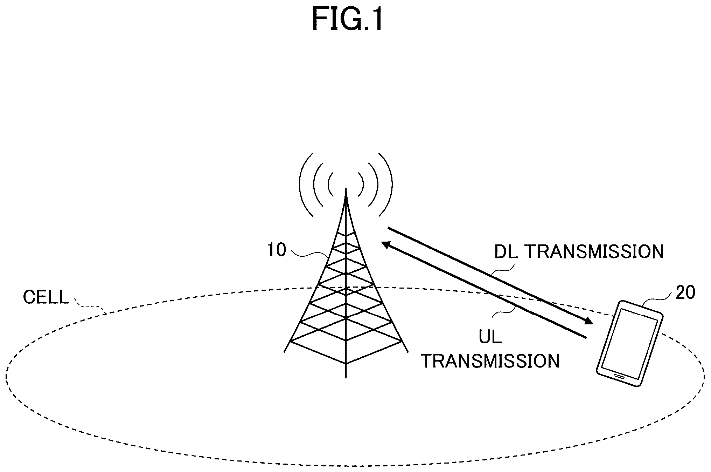

Fig. 1 is a drawing illustrating a configuration example (1) of a wireless communication system in an embodiment of the present invention. As illustrated in Fig. 1, a wireless communication system in an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and an NR-SSS. The system information is transmitted via, for example, an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

The terminal 20 is capable of performing carrier aggregation in which a plurality of cells (a plurality of CCs (Component Carrier)) are bundled for performing communication with the base station 10. In the carrier aggregation, one PCell (Primary cell) and one or more SCells (Secondary cell) are used. In addition, PUCCH-SCell having PUCCH may be used.

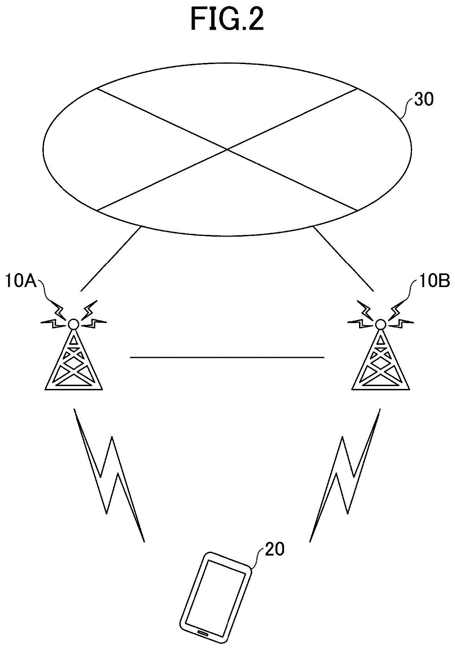

Fig. 2 is a drawing illustrating an example (2) of a wireless communication system in an embodiment of the present invention. Fig. 2 shows an example of a configuration of a wireless communication system in a case where DC (Dual connectivity) is performed. As shown in Fig. 2, a base station 10A serving as an MN (Master Node) and a base station 10B serving as an SN (Secondary Node) are provided. The base station 10A and the base station 10B are each connected to a core network. The terminal 20 is enabled to communicate with both the base station 10A and the base station 10B.

A cell group provided by the base station 10A that is an MN is called an MCG (Master Cell Group), and a cell group provided by the base station 10B that is an SN is called an SCG (Secondary Cell Group). In addition, in DC, the MCG includes one PCell and one or more SCells, and the SCG includes one PSCell (Primary SCG Cell) and one or more SCells.

Processing operations in an embodiment of the present invention may be performed by a system configuration illustrated in Fig. 1, may be performed by a system configuration illustrated in Fig. 2, or may be performed by other system configurations.

In an embodiment of the present invention, the terminal 20 performs UL Tx switching (uplink transmission switching). The UL Tx switching is a technique of switching bands used for transmission by the UL transmission antenna. According to the UL Tx switching, switching can be performed between an operation of obtaining the power gain by using two antennas and an operation of expanding the band by using the two antennas one by one.

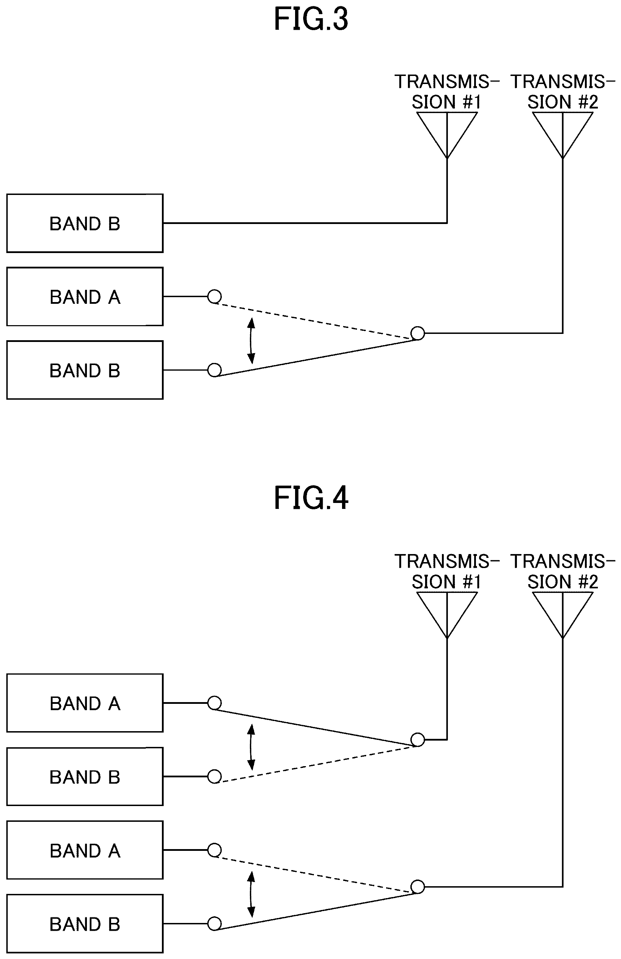

Fig. 3 is a drawing illustrating an example of UL Tx switching in the 3GPP (registered trademark) Release 16. As illustrated in Fig. 3, switching is performed between two bands in one antenna in the UL Tx switching in the 3GPP Release 16.

Fig. 4 is a drawing illustrating an example of UL Tx switching in the 3GPP Release 17. As illustrated in Fig. 4, switching is performed between two bands in each of the two antennas in the UL Tx switching in the 3GPP Release 16.

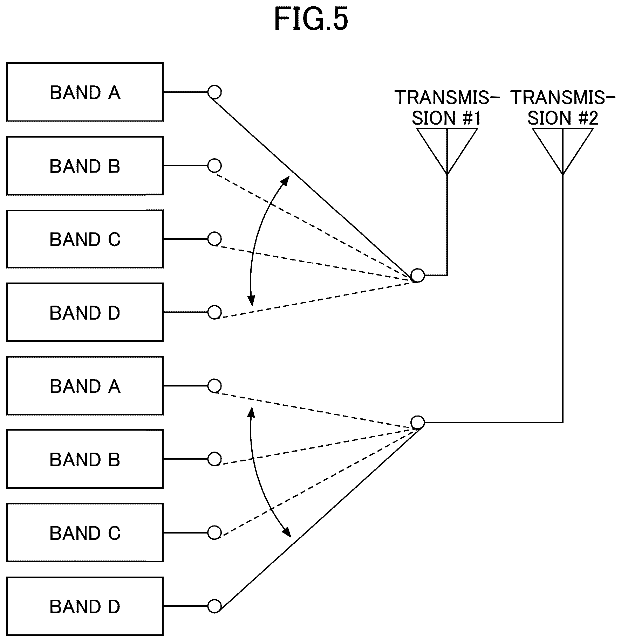

Fig. 5 is a drawing illustrating an example of UL Tx switching in an embodiment of the present invention. An example of UL Tx switching illustrated in Fig. 5 is, for example, the UL Tx switching in the 3GPP Release 18. In the UL Tx switching in the 3GPP Release 18, switching is performed between three bands or four bands in each of the two antennas.

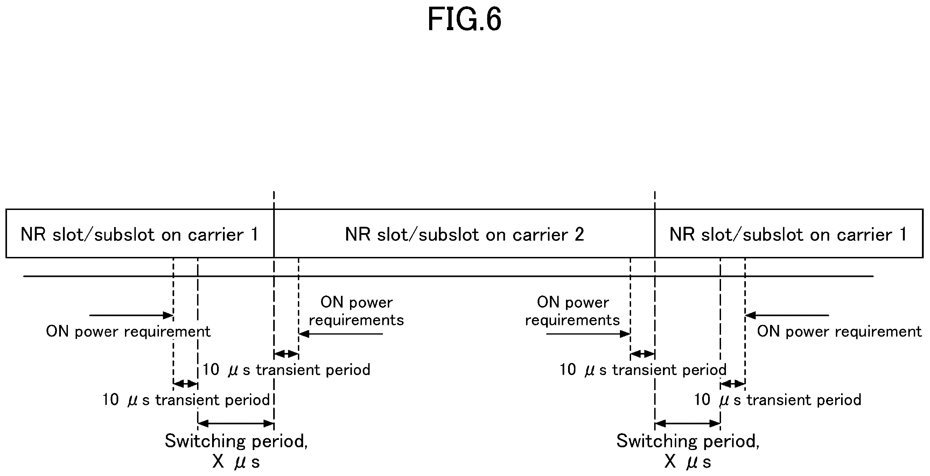

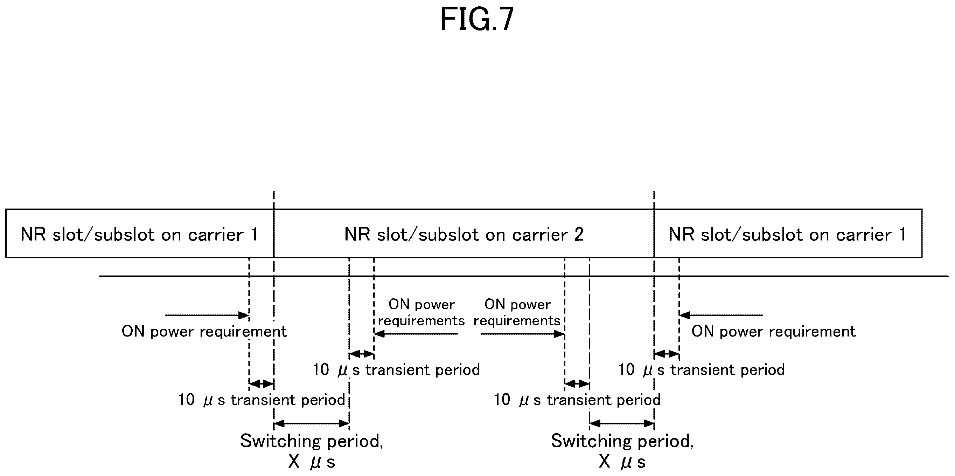

A switching period is configured before or after the UL Tx switching is performed. The switching period is a switching period during which the terminal 20 stops UL transmissions. The location in the time domain used for configuring the switching period is referred to as a switching period location. Fig. 6 illustrates an example in which switching periods are configured in carrier 1 when the UL Tx switching is performed between carrier 1 and carrier 2. Fig. 7 illustrates an example in which switching periods are configured in carrier 2 when the UL Tx switching is performed between carrier 1 and carrier 2.

It is required that the switching period location that is configured in the terminal 20 must be the same as the switching period location that is configured in the network (for example, the base station 10).

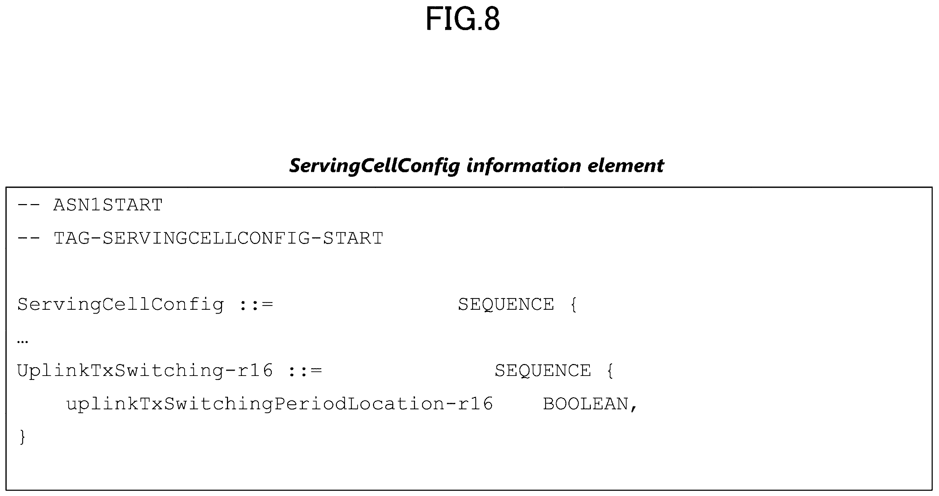

In the 3GPP Release 16 and Release 17, the network configures the switching period location by using ServingCellConfig that is an IE (Information Element) in RRC configuration illustrated in Fig. 8. The network configures uplinkTxSwitchingPeriodLocation-r16 for each serving cell (that is, for each band) as illustrated in Fig. 8. The terminal configures the switching period in a band of the serving cell in which TRUE is configured from among a band that is used before the UL Tx switching and a band that is used after the UL Tx switching. Here, in the 3GPP Release 16 and Release 17, as illustrated in Fig. 3 and Fig. 4, the number of bands per antenna is equal to or less than two, and thus, the switching period location can be identified by distinguishing between the two bands including a band in which the switching period is configured and a band in which the switching period is not configured. Accordingly, uplinkTxSwitchingPeriodLocation-r16 in ServingCellConfig in the 3GPP Release 16 and Release 17 indicates the band of the switching period location from among the two bands. In other words, uplinkTxSwitchingPeriodLocation-r16 in ServingCellConfig in the 3GPP Release 16 and Release 17 cannot indicate the band of the switching period location from among the three or more bands.

With respect to the above, in the 3GPP Release 18, as illustrated in Fig. 5, the number of bands per antenna is increased to three or four. According to an embodiment of the present invention, the band in which the switching period of the UL Tx switching is configured can be determined by configuring cell pairs in which two cells are paired even in a case where the number of bands per antenna is equal to or greater than three.

In an embodiment of the present invention, the cell pair is a pair of cells among a plurality of cells. In this embodiment, the cell may be replaced with a band. In an embodiment of the present invention, the cell pair may be referred to as a band pair, a pair of cells, or a pair of bands.

### (First embodiment)

According to First embodiment, a new IE (Information Element) that defines a configuration per cell pair is introduced, and the location in which the switching period is configured can be determined based on information indicating the switching period location of the UL Tx switching for each of the configured cell pairs.

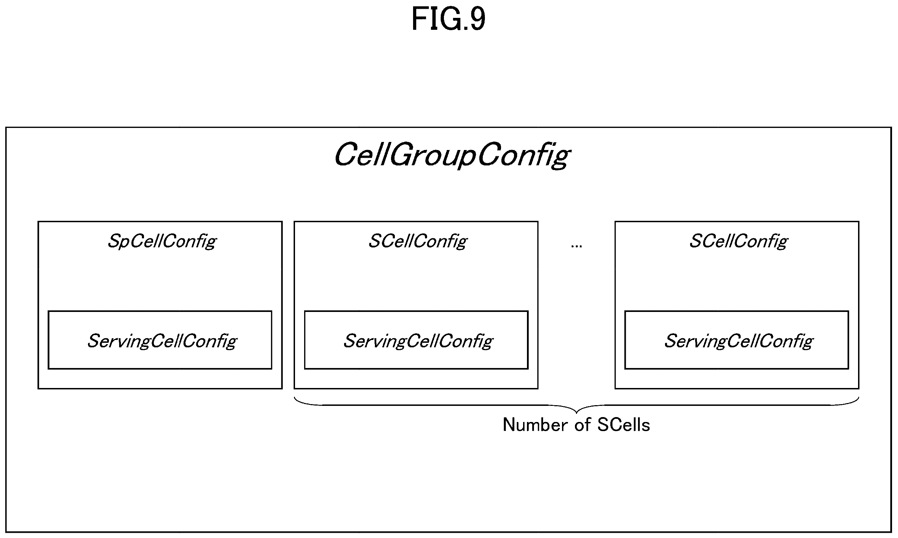

Fig. 9 is a drawing illustrating a message structure of CellGroupConfig in RRC Configuration in the 3GPP Release 17. As illustrated in Fig. 9, CellGroupConfig that is an IE related to the cell group configuration includes SpCellConfig that is a parameter of SpCell (Special Cell) in the cell group and SCellConfig that is a parameter of a plurality of SCells in the cell group. However, in CellGroupConfig of the 3GPP Release 17, there is no IE used for performing a configuration per cell pair by associating one cell in the cell group with other cells in the cell group.

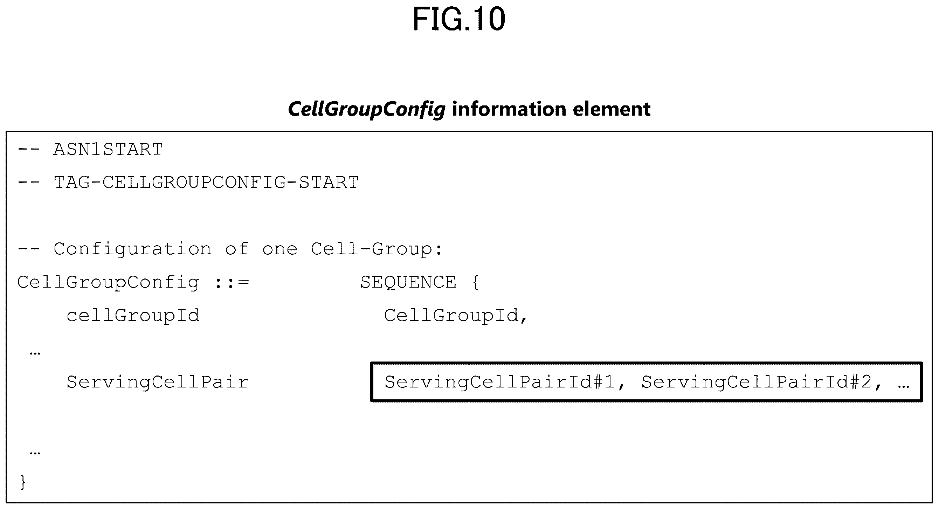

In First embodiment, in the terminal 20, two cells among a plurality of cells included in the cell group may be configured as a cell pair. For example, in RRC Configuration, a new IE used for defining cell pairs may be specified. For example, as illustrated in Fig. 10, ServingCellPair that is a new IE may be specified in CellGroupConfig. CellGroupConfig is used for configuring MCG or SCG, and the cell group includes an SpCell and one or more SCells.

In First embodiment, ServingCellPair indicates, for example, that one cell in the cell group and another cell that is paired with the one cell form a cell pair. Identification information items of two cells may be configured for each of the cell pairs in ServingCellPair. In ServingCellPair, an identification information item of a cell pair used for identifying the cell pair may be configured, and the identification information items of two cells may be associated with each of the identification information items of the cell pairs. In ServingCellPair, for example, cell pairs for all of the cells in the cell group may be configured, or cell pairs for some of the cells in the cell group may be configured. The name of the IE used for defining cell pairs in CellGroupConfig is not limited to ServingCellConfig, and may be a different name.

In First embodiment, in a case where the UL Tx switching is performed between two cells included in a cell pair, ServingCellPair may indicate a cell corresponding to a band in which the switching period of the UL Tx switching is configured from among the two cells included in the cell pair.

In First embodiment, in a case where the terminal 20 performs UL Tx switching between two cells included in a cell pair based on ServingCellPair, a control may be performed in a manner in which the switching period is to be configured in a band of one of the two cells included in the cell pair.

In First embodiment, in a case where the UL Tx switching is performed between two cells included in a cell pair, ServingCellPair may indicate that the switching period is to be configured in a band of a cell that is used before or after the UL Tx switching from among the two cells included in the cell pair.

In First embodiment, in a case where the terminal 20 performs UL Tx switching between two cells included in a cell pair based on ServingCellPair, a control may be performed in a manner in which the switching period is to be configured in a band of a cell that is used before or after the UL Tx switching from among the two cells included in the cell pair.

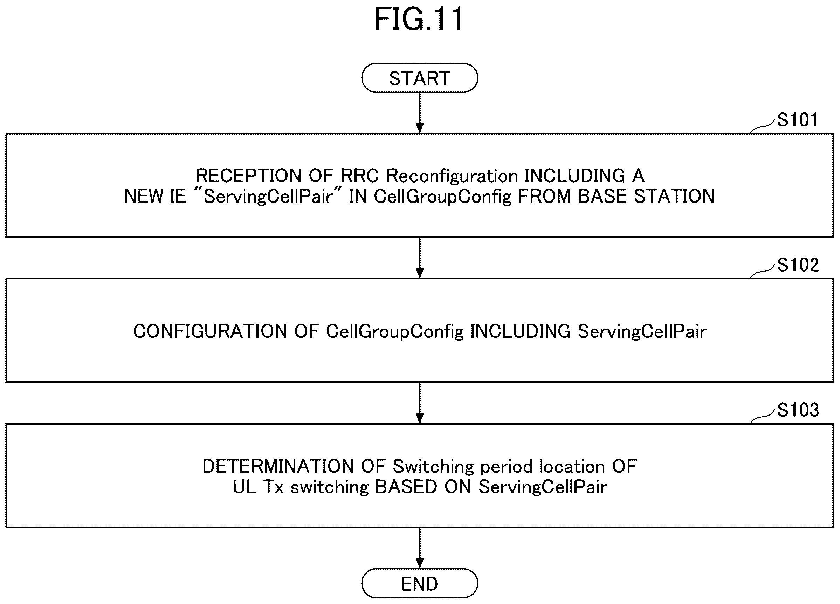

Fig. 11 is a flowchart illustrating an example of an operation performed by a terminal 20 in First embodiment.

As illustrated in Fig. 11, in step S101, the terminal 20 receives RRC Reconfiguration including a new IE "ServingCellPair" in CellGroupConfig from the base station.

In step S102, CellGroupConfig including ServingCellPair is configured in the terminal 20.

In step S103, the terminal 20 determines the switching period location of the UL Tx switching, based on ServingCellPair.

### (Second embodiment)

According to Second embodiment, in a configuration for each cell, a cell pair is determined by adding another cell to be paired to one cell and a band in which the switching period is to be configured is determined based on information indicating the switching period location of the UL Tx switching for each of the cell pairs.

The configuration for each cell in Second embodiment is ServingCellConfig in RRC Configuration, for example. ServingCellConfig is an IE that is used for configuring, in the terminal 20, information related to the serving cell that is an SpCell or an SCell in MCG or SCG.

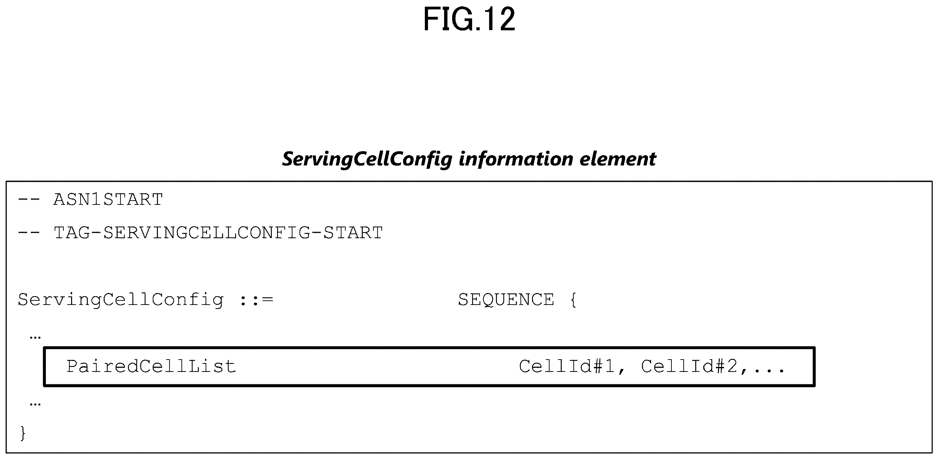

In Second embodiment, as illustrated in Fig. 12, an IE (for example, PairedCellList) indicating a list of cells that are paired with the serving cell may be added to ServingCellConfig. In an example illustrated in Fig. 12, with respect to the parameters of PairedCellList, identification information items of cells that are paired with the serving cell (CellId#1, CellId#2, ...) are configured.

In Second embodiment, in a case where the UL Tx switching is performed between the serving cell and each of the cells that are paired with the serving cell, PairedCellList may indicate that the switching period is to be configured in a band of the serving cell, or may indicate that the switching period is to be configured in a band of a cell that is paired with the serving cell.

The name of an IE that is included in ServingCellConfig in Second embodiment indicating a list of cells that are paired with the serving cell is not limited to PairedCellList, and may be any name.

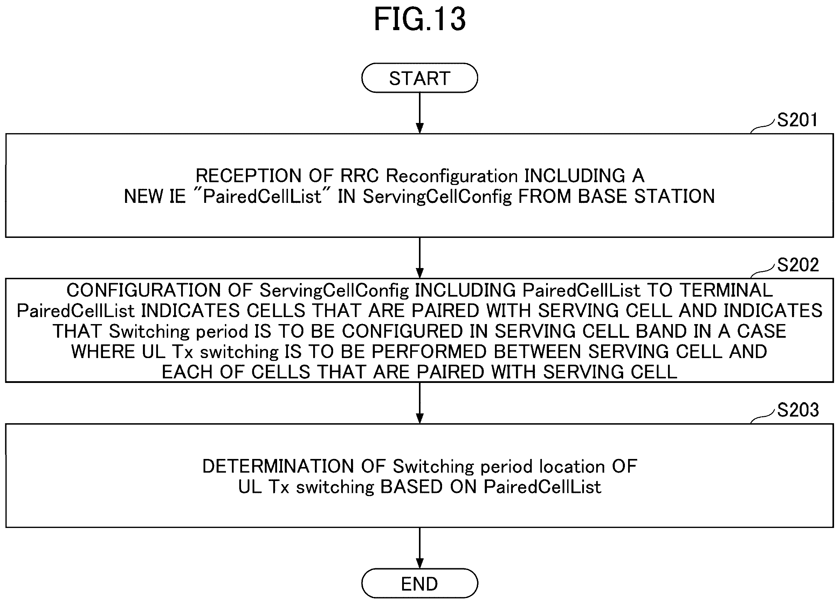

Fig. 13 is a flowchart illustrating an example of an operation performed by a terminal 20 in Second embodiment.

As illustrated in Fig. 13, in step S201, the terminal 20 receives RRC Reconfiguration including a new IE "PairedCellList" in ServingCellConfig from the base station.

In step S202, ServingCellConfig including PairedCellList is configured in the terminal 20. PairedCellList indicates cells that are paired with the serving cell, and indicates that the switching period is to be configured in a band of the serving cell in a case where the UL Tx switching is performed between the serving cell and each of the cells that are paired with the serving cell. For example, as illustrated in Fig. 5, in a case where each antenna of the terminal 20 includes four bands (bands A to D), the serving cell is a cell A corresponding to the band A, and identification information items of a cell B, a cell C, and a cell D are configured in PairedCellList, PairedCellList indicates that the switching period is to be configured in a band A of the cell A that is the serving cell.

In step S203, the terminal 20 determines the switching period location of the UL Tx switching, based on PairedCellList.

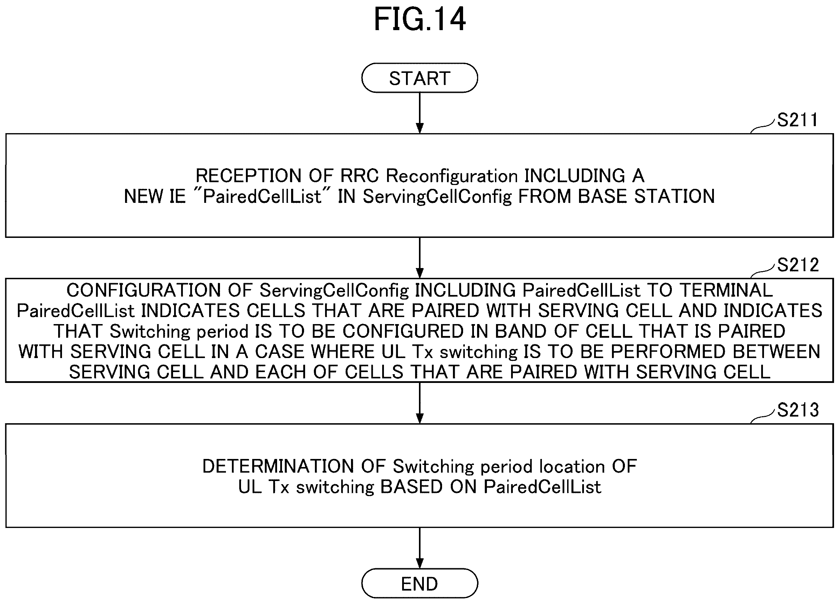

Fig. 14 is a flowchart illustrating another example of an operation performed by a terminal 20 in Second embodiment. The step S211 in Fig. 14 corresponds to step S201 in Fig. 13.

In step S212, ServingCellConfig including PairedCellList is configured in the terminal 20. PairedCellList indicates cells that are paired with the serving cell, and indicates that the switching period is to be configured in a band of a cell that is paired with the serving cell in a case where the UL Tx switching is performed between the serving cell and each of the cells that are paired with the serving cell. For example, as illustrated in Fig. 5, in a case where each antenna of the terminal 20 includes four bands (bands A to D), the serving cell is a cell A corresponding to the band A, and identification information items of a cell B, a cell C, and a cell D are configured in PairedCellList, PairedCellList indicates that the switching period is to be configured in a band B of the cell B, in a band C of the cell C, and in a band D of the cell D.

In step S213, the terminal 20 determines the switching period location of the UL Tx switching, based on PairedCellList.

It is to be noted that, in Second embodiment, the IE indicating a list of cells that are paired with the serving cell or another new IE included in ServingCellConfig may indicate which of the serving cell or a cell that is paired with the serving cell is to be configured to be a cell used for determining a band in which the switching period is configured for each of the cell pairs (the serving cell and a cell that is paired with the serving cell).

### (Third embodiment)

According to Third embodiment, in a configuration for each cell, a cell pair is determined by adding another cell to be paired to one cell, and whether the switching period is to be configured before or after the UL Tx switching is determined based on information indicating the switching period location of the UL Tx switching for each of the cell pairs.

The configuration for each cell in Third embodiment is, for example, ServingCellConfig in RRC Configuration in the same way as in Second embodiment.

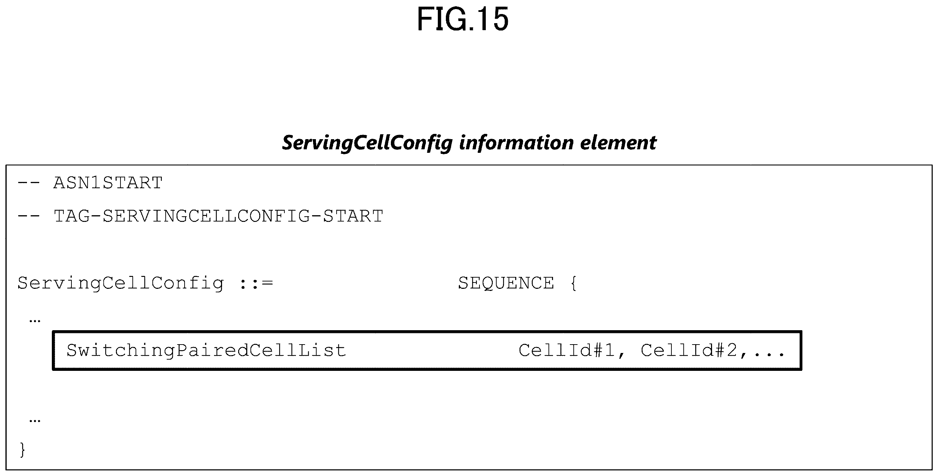

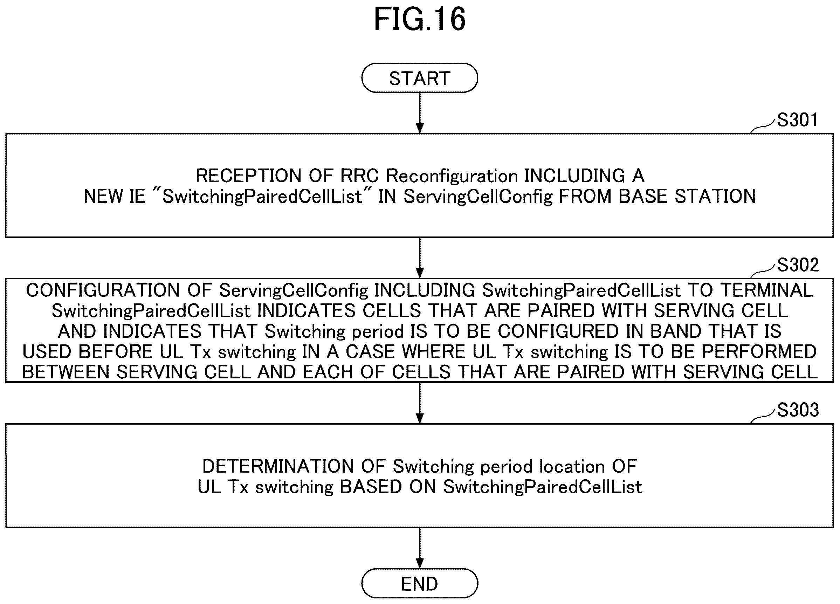

In Third embodiment, as illustrated in Fig. 15, an IE (for example, SwitchingPairedCellList) indicating a list of cells that are paired with the serving cell may be added to ServingCellConfig. In an example illustrated in Fig. 16, with respect to the parameters of PairedCellList, identification information items of cells that are paired with the serving cell (CellId#1, CellId#2, ...) are configured.

In Third embodiment, in a case where the UL Tx switching is performed between the serving cell and each of the cells that are paired with the serving cell, PairedCellList may indicate that the switching period is to be configured in a band that is used before the UL Tx switching, or may indicate that the switching period is to be configured in a band that is used after the UL Tx switching.

The name of an IE that is included in ServingCellConfig in Third embodiment indicating a list of cells that are paired with the serving cell is not limited to SwitchingPairedCellList, and may be any name.

Fig. 16 is a flowchart illustrating an example of an operation performed by a terminal 20 in Third embodiment.

As illustrated in Fig. 16, in step S301, the terminal 20 receives RRC Reconfiguration including a new IE "SwitchingPairedCellList" in ServingCellConfig from the base station.

In step S302, ServingCellConfig including SwitchingPairedCellList is configured in the terminal 20. SwitchingPairedCellList indicates cells that are paired with the serving cell, and indicates that the switching period is to be configured in a band that is used before the UL Tx switching in a case where the UL Tx switching is performed between the serving cell and each of the cells that are paired with the serving cell. For example, as illustrated in Fig. 5, in a case where each antenna of the terminal 20 includes four bands (bands A to D), the serving cell is a cell A corresponding to the band A, and identification information items of a cell B, a cell C, and a cell D are configured in SwitchingPairedCellList, the switching period is to be configured in a band that is used before the UL Tx switching from among the corresponding bands A to D of the cells A to D.

In step S303, the terminal 20 determines the switching period location of the UL Tx switching, based on SwitchingPairedCellList.

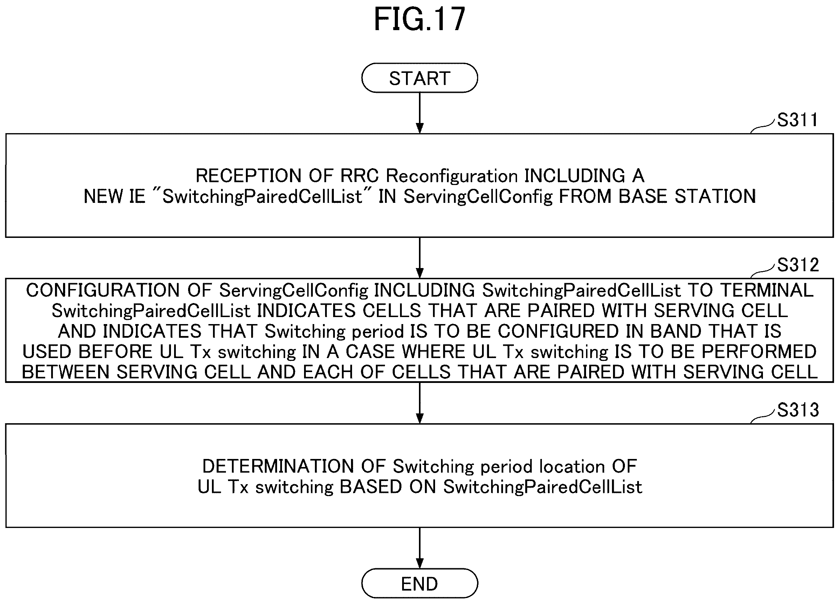

Fig. 17 is a flowchart illustrating another example of an operation performed by a terminal 20 in Third embodiment. The step S311 in Fig. 17 corresponds to step S301 in Fig. 16.

In step S312, ServingCellConfig including SwitchingPairedCellList is configured in the terminal 20. SwitchingPairedCellList indicates cells that are paired with the serving cell, and indicates that the switching period is to be configured in a band that is used after the UL Tx switching in a case where the UL Tx switching is performed between the serving cell and each of the cells that are paired with the serving cell. For example, as illustrated in Fig. 5, in a case where each antenna of the terminal 20 includes four bands (bands A to D), the serving cell is a cell A corresponding to the band A, and identification information items of a cell B, a cell C, and a cell D are configured in SwitchingPairedCellList, the switching period is to be configured in a band that is used after the UL Tx switching from among the corresponding bands A to D of the cells A to D.

In step S313, the terminal 20 determines the switching period location of the UL Tx switching, based on SwitchingPairedCellList.

It is to be noted that, in Third embodiment, the IE indicating a list of cells that are paired with the serving cell or another new IE included in ServingCellConfig may indicate whether the switching period is to be configured before or after the UL Tx switching for each of the cell pairs (the serving cell and a cell that is paired with the serving cell).

It is to be noted that, in Second and Third embodiments, for example, there may be a case in which there is a conflicting configuration between: the configuration for the cell B (band B), the cell C (band C), and the cell C (band C) that are paired with the cell A (band A) in a list of the cell A (band A) that is a serving cell; and the configuration for the cell A (band A), the cell C (band C), and the cell C (band C) that are paired with the cell B (band B) in a list of the cell B (band B) that is a serving cell. For example, in the list for the cell A (band A) that is a serving cell and the list for the cell B (band B) that is a serving cell, there may be a case in which the switching period is to be configured in the band of the serving cell, or there may be a case in which the switching period is to be configured in a cell (band) that is used immediately before the UL Tx switching in one list, whereas, the switching period is to be configured in a cell (band) that is used immediately after the UL Tx switching in another list.

In order to avoid this kind of conflicting configuration between the lists, for example, the base station 10 may perform a control in a manner in which there is no conflict between the lists of two cells (bands). For example, in a case where there is a conflict between the two lists, the switching period may be configured in a band whose frequency is either higher or lower than that of the other band. For example, in a case where there is a conflict between the two lists, the switching period may be configured in a band that is used either before or after the UL Tx switching.

### <Configuration related to an embodiment of the present invention>

### (First item)

A terminal including:
a control unit configured to perform uplink transmission switching between two cells from among a plurality of cells; and
a reception unit configured to receive, from a base station, information indicating pairs of two cells from among the plurality of cells, wherein
the control unit determines a location in a time domain of a switching period of the uplink transmission switching for each of the pairs, based on the information.

### (Second item)

The terminal as described in the first item, wherein
the control unit configures the switching period in a band of one of the two cells included in each pair based on the information.

### (Third item)

The terminal as described in the first item, wherein
the control unit configures the switching period either in a band that is used before the uplink transmission switching or in a band that is used after the uplink transmission switching from among bands of the two cells included in each pair, based on the information.

### (4th item)

The terminal as described in the first item, wherein
the plurality of cells are included in a cell group, and the information is included in cell group configuration information related to the cell group.

### (Fifth item)

A base station including:
a transmission unit configured to transmit information indicating pairs of two cells from among a plurality of cells to a terminal, wherein
the terminal performs uplink transmission switching between bands of the two cells from among the plurality of cells, and the information causes the terminal to determine a location in a time domain of a switching period of the uplink transmission switching for each of the pairs.

### (Sixth item)

A communication method performed by a terminal, the communication method including:
performing uplink transmission switching between bands of two cells from among a plurality of cells;
receiving, from a base station, information indicating pairs of two cells from among the plurality of cells; and
determining a location in a time domain of a switching period of the uplink transmission switching for each of the pairs, based on the information.

According to any one of the above-described configurations, the switching period of the uplink transmission switching can be appropriately configured even in a case of a number of a plurality of bands. According to the first item, the location in the time domain of the switching period of the uplink transmission switching can be determined for each pair, based on information by performing the uplink transmission switching between bands of two cells from among the plurality of cells and by receiving the information indicating a pair of two cells from among the plurality of cells from the base station. According to the second item, the switching period can be configured in a band of one of the two cells included in a pair, based on the information indicating the pair. According to the third item, the switching period can be configured either in a band that is used before the uplink transmission switching or in a band that is used after the uplink transmission switching from among the bands of two cells included in a pair, based on the information indicating the pair. According to the fourth item, in a case where the plurality of cells are included in a cell group, the information indicating the pair can be included in the cell group configuration information related to the cell group.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

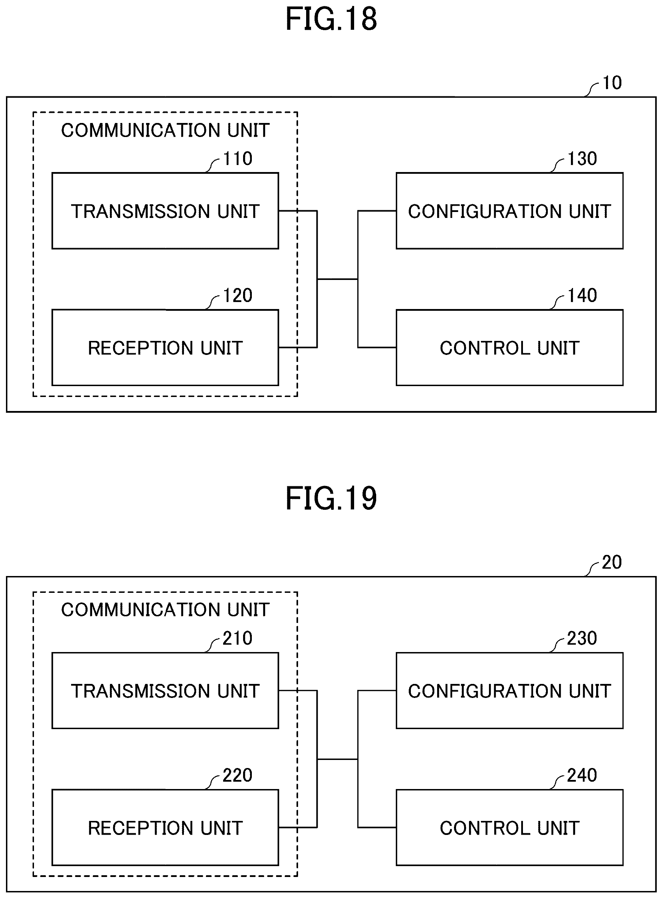

Fig. 18 is a drawing illustrating an example of a functional structure of a base station 10 in an embodiment of the present invention. As shown in Fig. 18, the base station 10 includes a transmission unit 110, a reception unit 120, a configuration unit 130, and a control unit 140. The functional configuration illustrated in Fig. 18 is merely an example. Functional divisions and names of functional units may be any division and name as long as operations related to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the UL transmission switching.

The control unit 140 performs control related to UL transmission switching as described in an embodiment of the present invention. The functional units related to signal transmission in the control unit 140 may be included in the transmission unit 110, and the functional units related to signal reception in the control unit 140 may be included in the reception unit 120.

### <Terminal 20>

Fig. 19 is a drawing illustrating an example of a functional structure of a terminal 20 in an embodiment of the present invention. As shown in Fig. 19, the terminal 20 includes a transmission unit 210, a reception unit 220, a configuration unit 230, and a control unit 240. The functional configuration illustrated in Fig. 19 is merely an example. Functional divisions and names of functional units may be any division and name as long as operations related to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. Further, the reception unit 220 has a function for receiving NR-PSS, NR-SSS, NR-PBCH, DL/UL/SL control signals, etc., transmitted from the base station 10. Further, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, or PSBCH.

The configuration unit 230 stores various configuration information items received by the reception unit 220 from the base station 10. In addition, the configuration unit 230 also stores pre-configured configuration information. Contents of the configuration information are, for example, information related to the UL transmission switching.

The control unit 240 performs control related to UL transmission switching as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 18 and Fig. 19) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

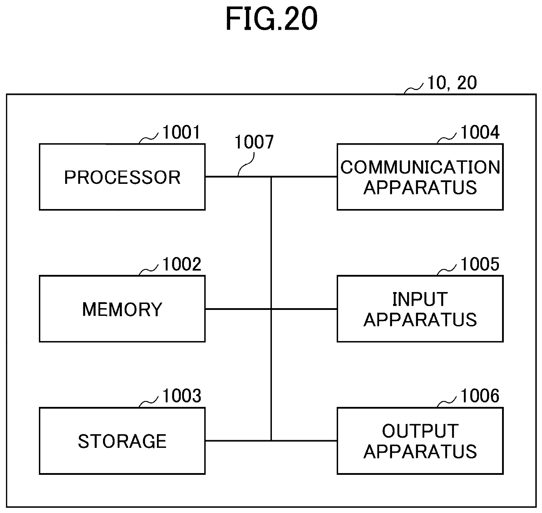

For example, the base station 10, the terminal 20, etc., according to an embodiment of the present disclosure may function as a computer for processing the radio communication method of the present disclosure. Fig. 20 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 18 may be implemented by control programs that are stored in the memory 1002 and that operate on the processor 1001. In addition, for example, the control unit 240 of the terminal 20 illustrated in Fig. 19 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

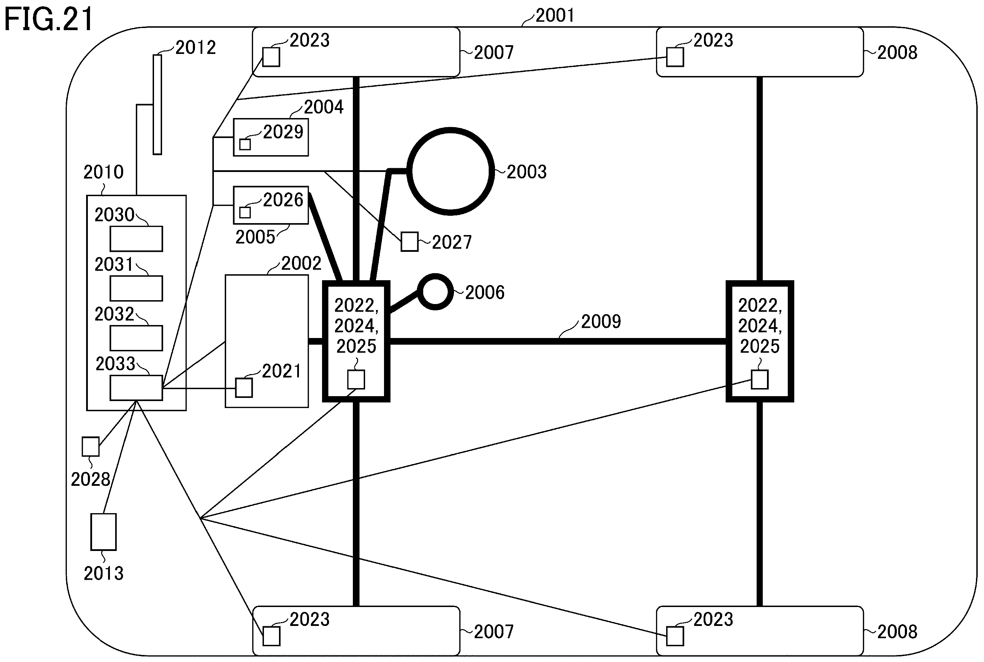

Fig. 21 shows an example of a configuration of a vehicle 2001. As shown in Fig. 21, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above-described embodiments. A person skilled in the art should understand that there are various modifications, variations, alternatives, replacements, etc. of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no conflict). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no conflict. For the sake of description convenience, the base station 10 and the terminal 20 have been described by using functional block diagrams. However, the apparatuses may be realized by hardware, software, or a combination of hardware and software. The software executed a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). For a UE, one or more BWPs may be configured in one carrier.

At least one of the configured BWPs may be activated, and the UE may assume that the UE will not transmit and receive signals/channels outside the activated BWP. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a control unit configured to perform uplink transmission switching between two cells from among a plurality of cells; and
a reception unit configured to receive, from a base station, information indicating pairs of two cells from among the plurality of cells, wherein
the control unit determines a location in a time domain of a switching period of the uplink transmission switching for each of the pairs, based on the information.

2. The terminal as claimed in claim 1, wherein
the control unit configures the switching period in a band of one of the two cells included in each of the pairs based on the information.

3. The terminal as claimed in claim 1, wherein
the control unit configures the switching period either in a band that is used before the uplink transmission switching or in a band that is used after the uplink transmission switching from among bands of the two cells included in each of the pairs, based on the information.

4. The terminal as claimed in claim 1, wherein
the plurality of cells are included in a cell group, and the information is included in cell group configuration information related to the cell group.

5. A base station comprising:
a transmission unit configured to transmit information indicating pairs of two cells from among a plurality of cells to a terminal, wherein
the terminal performs uplink transmission switching between bands of the two cells from among the plurality of cells, and the information causes the terminal to determine a location in a time domain of a switching period of the uplink transmission switching for each of the pairs.

6. A communication method performed by a terminal, the communication method comprising:
performing uplink transmission switching between bands of two cells from among a plurality of cells;
receiving, from a base station, information indicating pairs of two cells from among the plurality of cells; and
determining a location in a time domain of a switching period of the uplink transmission switching for each of the pairs, based on the information.
